# EUROPÄISCHE PATENTSCHRIFT

(11) **EP 3 583 835 B1**
(45) Veröffentlichungstag und Bekanntmachung des Hinweises auf die Patenterteilung: **08.01.2025**
(21) Anmeldenummer: 19181259.3
(22) Anmeldetag: 19.06.2019
(51) Int. Cl.: A01D 34/68, A01D 34/69

(54) **FAHRGESCHWINDIGKEITS-VORWAHLEINRICHTUNG FÜR MOTORBETRIEBENE GARTENGERÄTE**
SPEED PRE-SELECTION DEVICE FOR MOTOR DRIVEN GARDEN TOOLS
DISPOSITIF DE SÉLECTION DE VITESSE DE DÉPLACEMENT POUR APPAREILS DE JARDIN MOTORISÉS

(30) Priorität: 20.06.2018 DE 102018004988
(43) Veröffentlichungstag der Anmeldung: 25.12.2019
(73) Patentinhaber: MTD Products Inc, Valley City, OH 44280 (US)
(72) Erfinder: GEMBLER, Andre, 90571 Schweig (DE); KINZER, Andreas, 66424 Homburg (DE)
(74) Vertreter: Bird & Bird LLP - Hamburg

(56) Entgegenhaltungen:
- EP-A1- 2 269 437
- DE-A1- 19 964 347
- US-A1- 2013 081 500

## Beschreibung

Die Erfindung bezieht sich auf eine Fahrgeschwindigkeits-Vorwahleinrichtung für motorbetriebene Gartengeräte, wie beispielsweise Rasenmäher oder Vertikutierer, die ein mit Rädern oder dergleichen versehenes Fahrgestell, einen Führungsholm und einen Hauptantrieb für ein oder mehrere Arbeitswerkzeuge des Gartengerätes aufweisen. Ein Radantrieb für einige der Räder, auf denen das Gartengerät abrollt, wird von dem Hauptantrieb über steuerbare Kraftübertragungseinrichtungen abgeleitet, die Fahrgeschwindigkeits-Steuereinrichtungen umfassen. Eine Steuerung der Kraftübertragungseinrichtungen für den Radantrieb wird durch ein Verschieben und/oder Verschwenken von Steuerelementen erreicht, die zumindest teilweise durch den Führungsholm selbst und/oder durch an diesem angeordnete Steuerelemente gebildet sind.

Aus der US 4,117,652 A ist ein selbstfahrender Rasenmäher bekannt, bei dem die Änderung der Geschwindigkeit des Radantriebs mit Hilfe einer auf dem Hauptantrieb angeordneten ersten Riemenscheibe und einer einen verstellbaren effektiven Durchmesser aufweisenden zweiten Riemenscheibe eines auf der Hinterachse des Rasenmähers angeordneten Getriebes ermöglicht wird, das eine Schaltkupplung aufweist. Der Antriebsriemen zwischen dem Hauptantrieb und dem Getriebe des Radantriebs wird bei Änderungen des effektiven Durchmessers der zweiten Riemenscheibe durch eine Spannrolle gespannt gehalten. Die Schaltkupplung und die zweite Riemenscheibe werden durch getrennte Bowdenzüge über am Führungsholm angeordnete Steuerelemente getrennt betätigt. Der Führungsholm selbst ist starr an dem Fahrgestell des Rasenmähers befestigt.

Aus der US 4,689,939 A ist weiterhin ein selbstfahrender Rasenmäher bekannt, bei dem eine kombinierte Getriebe- und Kupplungseinrichtung vorgesehen ist, die aus einer Plattenkupplung besteht, die in einem Ölbad läuft, wobei die Platten im Leerlaufbetrieb voneinander in Abstand gehalten werden und im Fahrbetrieb zur Erzielung ansteigender Geschwindigkeiten fortlaufend näher aneinander gebracht werden. Die Betätigung dieser kombinierten Kupplungs- und Fahrgeschwindigkeits-Getriebeeinrichtung erfolgt über ein Verschwenken eines oberen Teils des Führungsholms in Fahrtrichtung, so dass sich nach Einrücken der Kupplung eine Fahrgeschwindigkeit ergibt, die sowohl von der Gehgeschwindigkeit des Bedieners, der den oberen Teil des Führungsholms in Fahrtrichtung mehr oder weniger nach vorne hin verschwenkt, als auch von dem Widerstand abhängt, der der Vorwärtsbewegung des Rasenmähers entgegenwirkt. Dadurch, dass die in dem Radantrieb-Getriebe angeordnete Plattenkupplung über einen großen Teil ihres Geschwindigkeits-Steuerbereiches als Reibungskupplung wirkt, treten hierbei erhebliche Energieverluste auf, wenn die kombinierte Kupplungs- und Fahrgeschwindigkeits-Kupplung nicht vollständig eingekuppelt ist.

Gleiches gilt auch für einen selbstfahrenden Rasenmäher gemäß der EP 0298016 Al, bei dem die Geschwindigkeitssteuerung durch Verschwenken des Radantriebs-Getriebes erfolgt, wobei das Getriebegehäuse schwenkbar auf der von ihr horizontal zu den Antriebsrädern abgehenden Getriebeausgangswelle gelagert ist. Eine sich von dem Getriebe aus nach oben erstreckende Getriebeeingangswelle trägt eine Riemenscheibe, die über einen Riemen von einer Riemenscheibe auf dem Hauptantrieb angetrieben wird. Wenn das Getriebe bei laufendem Motor mehr und mehr in Richtung auf den Hauptantrieb verschwenkt wird, vermindert sich analog die Riemenspannung bis die Getriebeeingangswelle und somit auch der Rasenmäher schließlich zum Stillstand kommt. Umgekehrt wird der Mäher durch Aufrichten des Getriebes und der damit einhergehenden Erhöhung der Riemenspannung wieder in Bewegung gesetzt. Das Getriebegehäuse ist über einen Seilzug (Bowdenzug) mit einem beweglichen Bedienholm derart verbunden, dass durch eine Vorwärtsbewegung des Bedienholms das Getriebe aufgerichtet und der Keilriemen gespannt wird. Über den Seilzug besteht daher bei den gegebenen Randbedingungen hinsichtlich Fahrwiderstand und dergleichen ein direkter annähernd proportionaler Zusammenhang zwischen der Bedienkraft und der Riemenspannung.

Weiterhin ist ein selbstfahrender Rasenmäher aus der EP 2 269 437 A1 bekannt, der eine Fahrgeschwindigkeits-Vorwahleinrichtung aufweist, bei der ein Abschnitt der Seele in dem Gehäuse der Vorwahleinrichtung durch ein Spannelement, dessen Position durch einen Hebel eingestellt kann, gespannt wird. Schließlich sind aus der DE 199 64 347 A1 und der US 2013/0081500 Rasenmäher mit Bedienelementen am Führungsholm bekannt.

Der Antriebsmotor eines Rasenmähers ist üblicherweise auf eine feste Drehzahl von circa 3000 U/min eingestellt. Damit ergibt sich in Abhängigkeit von dem Gesamtübersetzungsverhältnis der Kraftübertragungseinrichtungen zum Radantrieb eine feste maximale Fahrgeschwindigkeit des Rasenmähers, die sich jedoch erst bei schlupffreiem Lauf der Kraftübertragungseinrichtungen einstellt. Wird ein schlupffreier Lauf nicht erreicht, fährt der Mäher in Abhängigkeit von dem Widerstand, der seiner Vorwärtsbewegung entgegenwirkt, langsamer. Dieser Effekt wird bei den vorstehend genannten Systemen zur Geschwindigkeitssteuerung genutzt. Fährt der Mäher langsamer als gewünscht, wird der Druck auf den Bedienholm erhöht, fährt er zu schnell, wird die Bedienkraft reduziert. Der Mäher passt sich also quasi automatisch an die Schrittgeschwindigkeit des Bedieners an.

Das Drehmoment am Antriebsrad, das zur Erzielung einer bestimmten Fahrgeschwindigkeit erforderlich ist, hängt von verschiedenen Faktoren ab. Bedeutend ist der Rollwiderstand des Mähers, der sich im Wesentlichen aus seinem Gewicht, dem Raddurchmesser und der Radbreite ergibt. Ferner haben natürlich die Neigung des Geländes und die Beschaffenheit der Rasenfläche einen großen Einfluss. Ändert sich einer dieser Faktoren, so kann ein plötzlicher Anstieg der Fahrgeschwindigkeit auftreten, der unerwünscht und gefährlich sein kann.

Der Erfindung liegt die Aufgabe zugrunde, eine Fahrgeschwindigkeits-vorwahleinrichtung für motorbetriebene Gartengeräte zu schaffen, bei der eine maximal gewünschte maximale Fahrgeschwindigkeit sehr einfach einstellbar ist.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Die Einstellung einer vorbestimmten Maximalgeschwindigkeit ist vor allen Dingen dann zweckmäßig, wenn eine zu schnelle Fahrgeschwindigkeit zu einem schlechteren Mäh- und Fangergebnis führt. Dies ist zum Beispiel bei sehr hohem oder nassen Gras der Fall. Wird unter diesen Bedingungen zu schnell gemäht, ergibt sich ein unsauberes Schnittbild der gemähten Fläche oder die Fangeinrichtung verstopft bereits bei geringem Füllgrad. Mit einer auf die Mähverhältnisse einstellbaren maximalen Fahrgeschwindigkeit ist ein optimales Mähergebnis sichergestellt, und der Bediener kann sich ganz auf die eigentliche Mäharbeit konzentrieren.

Der Wunsch nach einer begrenzten Maximalgeschwindigkeit besteht erfahrungsgemäß auch bei älteren Anwendern. Für diesen Personenkreis ist es wichtig, dass der Mäher auch bei einer Fehlbedienung nicht zu schnell fährt. Trotz der eingestellten Maximalgeschwindigkeit bleiben die Vorzüge der automatischen Geschwindigkeitssteuerung erhalten. Die Anpassung der Fahrgeschwindigkeit an die Schrittgeschwindigkeit des Bedieners erfolgt automatisch aber innerhalb vorwählbarer Grenzen.

Die Erfindung wird im Folgenden anhand eines in der Zeichnung dargestellten Ausführungsbeispiels noch näher erläutert.

In der Zeichnung zeigen:
Figur 1 eine perspektivische Ansicht einer Ausführungsform eines Führungsholms und eines Bedienholms für motorbetriebene Gartengeräte;
Figur 2 eine Seitenansicht der Ausführungsform des Führungsholms und des Bedienholms nach Figur 1;
Figur 3 eine Ausführungsform einer an dem Führungsholm nach den Figuren 1 und 2 befestigten Fahrgeschwindigkeits-Vorwahleinrichtung nach den Figuren 1 und 2;
Figur 4 eine auseinander gezogene Ansicht der Fahrgeschwindigkeits-Vorwahleinrichtung nach den Figuren 1 bis 3;
Figur 5 eine Ansicht der Fahrgeschwindigkeits-Vorwahleinrichtung in der Stellung für eine maximal vorwählbare Fahrgeschwindigkeit;
Figur 6 eine Ansicht der Fahrgeschwindigkeits-Vorwahleinrichtung in einer Stellung für eine minimal vorwählbare Fahrgeschwindigkeit.

Obwohl vorstehend und nachfolgend speziell auf Gartengeräte Bezug genommen wird, ist die Vorwahleinrichtung in gleicher Weise für andere Arbeitsgeräte anwendbar, die ein durch einen Motor angetriebenes Arbeitswerkzeug und einen mit der Abtriebswelle dieses Motors verbundene steuerbare Einrichtung, beispielsweise ein Stellgetriebe, zum Antrieb der Räder aufweisen, auf denen das Arbeitsgerät abrollt.

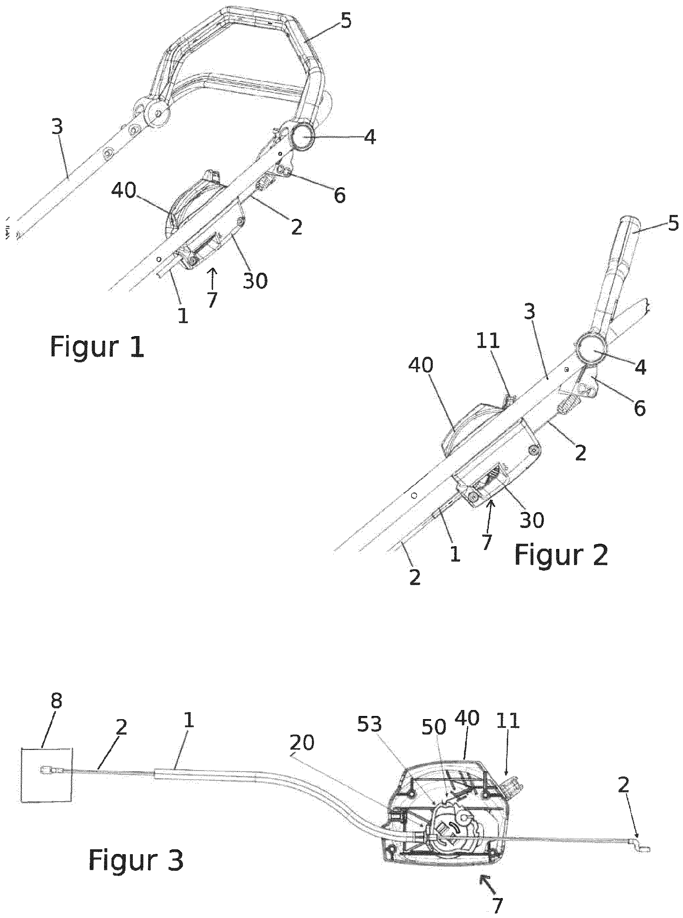

In Figur 1 ist eine Ausführungsform eines Führungsholms 3 für motorgetriebene Gartengeräte gezeigt, dessen unteres Ende an dem (nicht gezeigten) Gartengerät befestigt ist, während an seinem oberen Ende ein Bedienholm 5 über ein Schwenkgelenk 4 schwenkbar befestigt ist. Der Bedienholm 5 weist auf der entgegengesetzten Seite des Schwenkgelenks 4 einen Betätigungsansatz 6 auf.

Der Bedienholm 5 wird im nicht betätigten Ruhezustand durch nicht gezeigte Federelemente automatisch in eine Stellung für einen Stillstand des Radantriebs zurückgeführt, wobei die Federelemente entweder an dem Bedienholm selbst angeordnet oder Teil eines nicht gezeigten Stellgetriebes für die Fahrgeschwindigkeits-Steuerung sein können, das auf dem Fahrgestell des Gartengerätes angeordnet ist.

Der Betätigungsansatz 6 des Bedienholms 5 ist über einen Bowdenzug 1, 2 mit einer in Figur 3 nur schematisch dargestellten Antriebsmotor- und Stellgetriebeeinheit 8 zur Einstellung der Fahrgeschwindigkeit des Gartengerätes oder eines anderen Arbeitsgerätes verbunden, wobei der Antriebsmotor der das Arbeitswerkzeug des Gartengerätes antreibende Motor sein kann.

Der Bowdenzug 1, 2 umfasst eine biegsame äußere Umhüllung oder einen Mantel 1 und ein inneres Betätigungsseil oder eine Seele 2, die den Bedienholm 5 mit einem Steuerelement des Stellgetriebes 8 verbindet.

Dieser Bowdenzug 1, 2 dient damit zur Steuerung der Fahrgeschwindigkeit des Gartengerätes und gegebenenfalls auch zum Einkuppeln des Fahrantriebs.

Im Verlauf des Bowdenzugs 1, 2 ist eine Ausführungsform einer insgesamt mit 7 bezeichneten Fahrgeschwindigkeits-Vorwahleinrichtung angeordnet, wie dies in den Figuren 1 bis 3 gezeigt ist. Diese Fahrgeschwindigkeits-Vorwahleinrichtung ermöglicht eine Begrenzung der maximalen Fahrgeschwindigkeit auf einen gewünschten Wert. Wenn der Bedienholm 5 aus der in den Figuren 1 und 2 gezeigten Stillstandstellung nach links verschwenkt wird, wird der Bowdenzug 1, 2 gespannt und bewirkt ausgehend von der Stillstand-Stellung des Radantriebs zunächst ein Einkuppeln des Fahrantriebs und nachfolgend eine kontinuierliche Erhöhung der Fahrgeschwindigkeit des Radantriebs.

Wenn das Gartengerät über den Bedienholm 5 geführt wird, ergibt sich damit automatisch eine Anpassung der Fahrgeschwindigkeit an die Schrittgeschwindigkeit der Bedienungsperson, da bei einer langsameren Schrittgeschwindigkeit der Bedienungsperson der Bedienholm 5 in der in Figur 2 gezeigten Darstellung im Uhrzeigersinn verschwenkt wird, während bei einer schnelleren Schrittgeschwindigkeit der Bedienholm 5 im Gegenuhrzeigersinn verschwenkt wird, um die Drehzahl der Antriebsräder des Gartengeräts zu erhöhen.

Die Fahrgeschwindigkeits-Vorwahleinrichtung 7 ermöglicht es, die maximale Geschwindigkeit des Gartengerätes zu begrenzen, weil eine zu schnelle Fahrgeschwindigkeit zu einem schlechteren Mäh- und Fangergebnis führt. Dies ist beispielsweise bei einem sehr hohen oder nassen Gras der Fall. Wird unter diesen Bedingungen zu schnell gemäht, ergibt sich ein unsauberes Schnittbild der gemähten Fläche, oder die Fangeinrichtung verstopft bereits bei geringem Füllgrad. Mit einer auf die Mähverhältnisse und die gewünschte Schrittgeschwindigkeit einer Bedienungsperson einstellbaren maximalen Fahrgeschwindigkeit ist ein optimales Mähergebnis sichergestellt, und der Bediener kann sich ganz auf die eigentliche Mäharbeit konzentrieren.

Durch die Fahrgeschwindigkeits-Vorwahleinrichtung 7 erfolgt eine Anpassung der Fahrgeschwindigkeit an die Schrittgeschwindigkeit des Bedieners automatisch, aber innerhalb vorwählbarer Grenzen und ohne die Gefahr eines unerwarteten hohen Fahrgeschwindigkeits-Anstiegs.

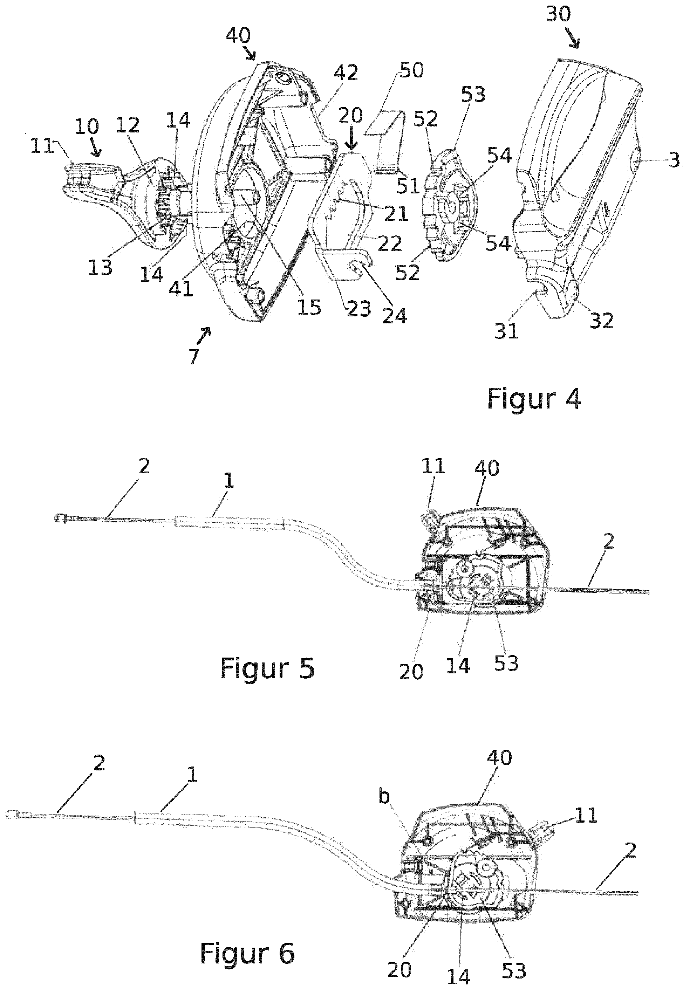

Die Fahrgeschwindigkeits-Vorwahleinrichtung 7 ist In den Figuren 3 und 4 ausführlicher dargestellt, wobei Figur 4 die einzelnen Teile der Fahrgeschwindigkeits-Vorwahleinrichtung zeigt. Diese Fahrgeschwindigkeitsvorwahleinrichtung 7 ist vorzugsweise in einem aus einem Grundkörper 40 und einem Deckel 30 bestehenden Gehäuse angeordnet, durch das hindurch sich die Seele 2 des Bowdenzugs 1, 2 von dem Betätigungsansatz 6 des Bedienholms 5 zu der Motor- und Verstellgetriebeeinheit 8 erstreckt.

Der Mantel 1 des Bowdenzugs 1, 2 endet in dem Gehäuse 30, 40 der Fahrgeschwindigkeits-Vorwahleinrichtung 7 und ist an dieser Stelle in einer Aufnahmeöffnung 24 einer Abwinklung 23 eines insgesamt mit 20 bezeichneten Anschlagschiebers festgelegt, jedoch frei verschiebbar in einer Bohrung 31 des Deckels 30 angeordnet.

Der Anschlagschieber 20 ist in Richtung der Achse des Bowdenzugs 1, 2 verschiebbar auf einer inneren Grundfläche des Grundkörpers 40 des Gehäuses gelagert und weist eine Aussparung 22 mit einer an deren Oberseite angeordneten Verzahnung 21 auf.

Ein insgesamt mit 10 bezeichneter Vorwahlhebel weist einen Hebel 11, einen zylindrischen Ansatz 12, der sich durch eine zylindrische Bohrung 41 in der Grundfläche des Grundkörpers 40 des Gehäuses erstreckt, eine sich daran anschließende Verzahnung 13, die mit der Verzahnung 21 des Anschlagschiebers 20 kämmt, und einen Führungszapfen 15 auf.

Bei einer Drehung des Vorwahlhebels 10 wird der Anschlagschieber 20 entlang der Seele 2 des Bowdenzugs 1, 2 zusammen mit dessen Mantel 1 verschoben.

Auf den Führungszapfen 15 ist eine Rastplatte 53 drehtest aufgesteckt, die an einem Teil ihres Umfangs eine Anzahl von Rastkerben 52 aufweist, die mit einem Rastvorsprung 51 einer V-förmigen Rastfeder 50 zusammenwirken, um den Vorwahlhebel 10 in gewünschten Drehstellungen einrasten zu lassen.

Die Rastplatte 53 weist Schlitze 54 auf, in die über die Verzahnung 13 des Vorwahlhebels 10 vorspringende Rastnasen 14 einrasten können, um den Anschlagschieber 20 zwischen der inneren Grundfläche des Grundkörpers 40 und der Rastplatte 53 und damit auch den Vorwahlhebel 10 in dem Grundkörper 40 in Axialrichtung festzulegen.

Die Betriebsweise der vorstehend beschriebenen Fahrgeschwindigkeitsvorwahleinrichtung wird nachfolgend anhand der Figuren 5 und 6 beschrieben.

Bei einer Drehung des Vorwahlhebels 10 wird der Anschlagschieber 20 in dem Gehäuse 30, 40 zwischen den in den Figuren 3, 4 und 5 gezeigten und durch die Rastplatte 53 und die Rastfeder 50 definierten Stellungen entlang der Achse der Seele 2 verschoben.

Wie dies in den Figuren 5 und 6 gezeigt ist, ergibt sich bei einer ersten Endstellung des Vorwahlhebels 10, die in Figur 5 gezeigt ist, ein maximaler Bereich der Fahrgeschwindigkeits-Steuerung, da der Anschlagschieber 20 soweit wie möglich nach links in Figur 5 verschoben ist und der Teil der Seele 2 zwischen der Fahrgeschwindigkeits-Vorwahleinrichtung 7 und dem Ansatz 6 des Bedienhebels 5 im Wesentlichen gespannt ist.

In Figur 6 ist die entgegengesetzte Endstellung des Steuerhebels 10 gezeigt, bei der der Anschlagschieber 20 und damit auch das in der Fahrgeschwindigkeitsvorwahleinrichtung 7 befindliche Ende so weit wie möglich nach rechts verschoben ist. Hierdurch ergibt sich eine Begrenzung der Fahrgeschwindigkeit, weil der Teil der Seele 2 zwischen der Fahrgeschwindigkeits-Vorwahleinrichtung 7 und dem Ansatz 6 des Bedienhebels 5 in der Ruhestellung des Bedienhebels 5 einen Durchhang aufweist und die anfängliche Bewegung des Bedienhebels 5 zunächst diesen Durchhang aufheben muss, bevor das Stellgetriebe 8 durch den Bowdenzug 1,2 betätigt wird. Damit kann das Stellgetriebe 8 bei der maximalen Schwenkbewegung des Bedienhebels 5 nur über einen Anfangsteil seines Betriebsbereichs, nicht jedoch bis zur maximalen Fahrgeschwindigkeit des Fahrantriebs, verstellt werden. Selbstverständlich sind zwischen den in den Figuren 5 und 6 dargestellten Endstellungen des Vorwahlhebels 11 eine Anzahl von durch die Rastplatte 53 und die Rastfeder 50 vorgegebene Zwischenstellungen möglich, die jeweils einen unterschiedlichen maximalen Stellweg der Stellgetriebes und damit eine unterschiedliche maximale Fahrgeschwindigkeit ergeben.

Obwohl in den Figuren 5 und 6 durch die Verschiebung des Anschlagschiebers ein Durchhang der Seele 2 zwischen der Vorwahleinrichtung 7 und dem Ansatz 6 des Bedienhebels 5 hervorgerufen wird, ist es in gleicher Weise möglich einen derartigen Durchhang an dem dem Stellgetriebe zugewandten Ende des Mantels 1 des Bowdenzugs 1, 2 zu erzeugen, wobei dann die in den Figuren 5 und 6 Endstellungen des Vorwahlhebels der minimalen bzw. maximalen Fahrgeschwindigkeit entsprechen würden.

## Patentansprüche

1. Fahrgeschwindigkeits-Vorwahleinrichtung (7) für motorbetriebene Gartengeräte, die ein mit Rädern oder dergleichen versehenes Fahrgestell, einen Führungsholm (3) und einen Hauptantrieb für ein oder mehrere Arbeitswerkzeuge des Gartengerätes aufweisen, wobei ein Radantrieb ausgehend von dem Hauptantrieb über steuerbare Kraftübertragungseinrichtungen (8) abgeleitet wird, die Kupplungseinrichtungen und/oder Fahrgeschwindigkeits-Steuereinrichtungen (4) umfassen, und wobei eine Steuerung der Kraftübertragungseinrichtungen (8) durch ein Verschieben und/oder Verschwenken von Steuerelementen (5,6) erfolgt, die zumindest teilweise durch den Führungsholm (3) selbst und/oder durch an diesem angeordnete Bedienelemente (5) gebildet und über einen Bowdenzug (1,2) mit den Kraftübertragungseinrichtungen (8) verbunden sind, **dadurch gekennzeichnet,**
**dass** die Fahrgeschwindigkeits-Vorwahleinrichtung (7) ein an dem Führungsholm (3) befestigtes Gehäuse (30, 40) aufweist, in dem das den Fahrgeschwindigkeits- Steuerelementen (5, 6) zugewandte Ende des Mantels (1) des Bowdenzugs (1, 2) frei verschiebbar angeordnet und in einem Anschlagschieber (20) festlegbar ist, der durch einen Vorwahlhebel (10) entlang der Achse des Bowdenzugs (1, 2) in dem Gehäuse (30, 40) verschiebbar ist, wobei der Anschlagschieber (20) zur Erzeugung eines Durchhangs in der Seele (2) des Bowdenzugs (1, 2) bei der Verstellung in Richtung auf kleinere maximale Fahrgeschwindigkeiten ausgebildet ist.

2. Vorwahleinrichtung (7) nach Anspruch 1, **dadurch gekennzeichnet, dass** am oberen Ende des Führungsholms (3) ein Bedienholm (5) über ein Schwenkgelenk (4) schwenkbar befestigt ist, dass der Bedienholm (5) auf der entgegengesetzten Seite des Schwenkgelenks (4) einen Betätigungsansatz (6) aufweist, und dass das Gehäuse (39, 40) im Verlauf des Bowdenzugs (1, 2) zwischen einer Antriebsmotor- und StellgetriebeEinheit (8) und dem Betätigungsansatz (6) angeordnet ist.

3. Vorwahleinrichtung (7) nach Anspruch 1 oder 2, **dadurch gekennzeichnet, dass** der Anschlagschieber (20) in Richtung der Achse des Bowdenzugs (1,2) verschiebbar auf einer inneren Grundfläche des Grundkörpers (40) des Gehäuses gelagert ist und eine Aussparung (22) mit einer an deren Oberseite angeordneten Verzahnung (21) aufweist, dass die Vorwahleinrichtung (7) einen Vorwahlhebel (10) mit einem Hebelteil (11), einem zylindrischen Ansatz (12), der sich durch eine zylindrische Bohrung (41) in der Grundfläche eines Grundkörpers (40) des Gehäuses (30, 40) erstreckt, einer sich daran anschließende Verzahnung (13), die mit der Verzahnung (21) des Anschlagschiebers (20) kämmt, und einem Führungszapfen (15) aufweist.

4. Vorwahleinrichtung (7) nach Anspruch 3, **dadurch gekennzeichnet, dass** auf den Führungszapfen (15) eine Rastplatte (53) drehfest aufgesteckt ist, die an einem Teil ihres Umfangs eine Anzahl von Rastkerben (52) aufweist, die mit einem Rastvorsprung (51) einer V-förmigen Rastfeder (50) zusammenwirken, um den Vorwahlhebel (10) in gewünschten Drehstellungen einrasten zu lassen.

5. Vorwahleinrichtung (7) nach Anspruch 4, **dadurch gekennzeichnet, dass** die Rastplatte (53) Schlitze (54) aufweist, in die über die Verzahnung (13) des Vorwahlhebels (10) vorspringende Rastnasen (14) einrastbar sind, derart, dass der Anschlagschieber (20) zwischen der inneren Grundfläche des Grundkörpers (40) und der Rastplatte (53) und damit auch der Vorwahlhebel (10) in dem Grundkörper (40) in Axialrichtung festgelegt sind.

6. Vorwahleinrichtung (7) nach einem oder mehreren der vorhergehenden Ansprüche, **dadurch gekennzeichnet, dass** das Gehäuse (39, 40) im Verlauf des Bowdenzugs (1, 2) zwischen einem Variatorgetriebe (8) und dem Betätigungsansatz (6) angeordnet werden kann.

## Claims

1. Motion speed pre-selection apparatus (7) for motor-driven garden tools, which have a chassis provided with wheels or the like, a handlebar (3) and a main drive for one or more working tools of the garden tool, wherein a wheel drive is derived from the main drive by means of controllable power transmission apparatuses (8),
which comprise coupling apparatuses and/or motion speed control apparatuses (4), and wherein a control of the power transmission apparatuses (8) is realized by moving and/or pivoting control elements (5,6),
which are formed, at least partially, by the handlebar (3) itself and/or by controls (5) arranged thereon and are connected to the power transmission apparatuses (8) by a Bowden cable (1,2),
**characterized in that**
the motion speed pre-selection apparatus (7) has a housing (30, 40) attached to the handlebar (3), in which the end of the sheath (1) of the Bowden cable (1, 2) facing the motion speed control elements (5, 6) is arranged freely movably and securably in a stop slide (20) which can be moved along the axis of the Bowden cable (1, 2) in the housing (30, 40) by means of a pre-selection lever (10), wherein the stop slide (20) is designed to create slack in the core (2) of the Bowden cable (1, 2) during adjustment towards lower maximum motion speeds.

2. Pre-selection apparatus (7) according to claim 1, **characterized in that** an operating bar (5) is pivotably attached to the upper end of the handlebar (3) by means of a pivot joint (4),
**in that** the operating bar (5) has an actuating extension (6) on the opposite side of the pivot joint (4), and **in that** the housing (39, 40) is arranged in the route of the Bowden cable (1, 2) between a drive motor and actuating gear unit (8) and the actuating extension (6).

3. Pre-selection apparatus (7) according to claim 1 or 2, **characterized in that** the stop slide (20) is movably mounted in the direction of the axis of the Bowden cable (1,2) on an inner base area of the main body (40) of the housing and has a recess (22) with teeth (21) arranged on its upper side, **in that** the pre-selection apparatus (7) has a pre-selection lever (10) with a lever part (11), a cylindrical extension (12) which extends through a cylindrical bore (41) in the base area of a main body (40) of the housing (30, 40), adjoining teeth (13), which mesh with the teeth (21) of the stop slide (20), and a guide pin (15).

4. Pre-selection apparatus (7) according to claim 3, **characterized in that** a latch plate (53) is attached in a rotationally fixed manner to the guide pin (15), which has a number of latching notches (52) on part of its circumference, which interact with a latching projection (51) of a V-shaped latch spring (50) to allow the pre-selection lever (10) to engage in desired rotational positions.

5. Pre-selection apparatus (7) according to claim 4, **characterized in that** the catch plate (53) has slots (54), in which latching lugs (14) projecting beyond the teeth (13) of the pre-selection lever (10) can be engaged such that the stop slide (20) is fixed in the axial direction between the inner base area of the main body (40) and the catch plate (53) and thus also the pre-selection lever (10) in the main body (40).

6. Pre-selection apparatus (7) according to one or more of the preceding claims, **characterized in that** the housing (39, 40) can be arranged in the route of the Bowden cable (1, 2) between a variable speed transmission (8) and the actuating extension (6).

## Revendications

1. Appareil de présélection de vitesse de déplacement (7) pour des appareils de jardin motorisés qui présentent un châssis doté de roues ou similaire, un longeron de guidage (3) et un entraînement principal pour un ou plusieurs outils de travail de l'appareil de jardin, dans lequel un entraînement de roue est dérivé de l'entraînement principal par l'intermédiaire d'appareils de transmission de force (8) pouvant être commandés,
qui comprennent des appareils d'accouplement et/ou des appareils de commande de vitesse de déplacement (4), et dans lequel une commande des appareils de transmission de force (8) est effectuée par un déplacement et/ou pivotement d'éléments de commande (5, 6),
qui sont formés au moins partiellement par le longeron de guidage (3) même et/ou par des éléments de commande (5) disposés sur celui-ci et sont connectés aux appareils de transmission de force (8) par un câble Bowden (1, 2),
**caractérisé en ce que**
l'appareil de présélection de vitesse de déplacement (7) présente un boîtier (30, 40) fixé sur le longeron de guidage (3), dans lequel l'extrémité de la gaine (1) du câble Bowden (1, 2) orientée vers les éléments de commande de vitesse de déplacement (5, 6) est disposée de manière librement déplaçable et peut être fixée dans un poussoir de butée (20) qui peut être déplacé par un levier de présélection (10) le long de l'axe du câble Bowden (1, 2) dans le boîtier (30, 40), dans lequel le poussoir de butée (20) est conçu pour générer un fléchissment dans l'âme (2) du câble Bowden (1, 2) lors du réglage en direction de vitesses de déplacement maximales inférieures.

2. Appareil de présélection (7) selon la revendication 1, **caractérisé en ce qu'**un longeron de commande (5) est fixé de manière pivotante à l'extrémité supérieure du longeron de guidage (3) par l'intermédiaire d'une articulation pivotante (4),
**en ce que** le longeron de commande (5) présente une patte d'actionnement (6) sur le côté opposé de l'articulation pivotante (4), et **en ce que** le boîtier (39, 40) est disposé sur le tracé du câble Bowden (1, 2) entre une unité de moteur d'entraînement et de transmission de réglage (8) et la patte d'actionnement (6).

3. Appareil de présélection (7) selon la revendication 1 ou 2, **caractérisé en ce que** le poussoir de butée (20) est monté de manière déplaçable en direction de l'axe du câble Bowden (1, 2) sur une surface de base intérieure du corps de base (40) du boîtier et présente un évidement (22) avec une denture (21) disposée sur son côté supérieur, **en ce que** l'appareil de présélection (7) présente un levier de présélection (10) avec une partie de levier (11), une patte cylindrique (12) qui s'étend à travers un alésage cylindrique (41) dans la surface de base d'un corps de base (40) du boîtier (30, 40), une denture (13) s'y raccordant, qui s'engrène avec la denture (21) du poussoir de butée (20), et un tenon de guidage (15).

4. Appareil de présélection (7) selon la revendication 3, **caractérisé en ce qu'**une plaque d'encliquetage (53) est fixée de manière non rotative sur le tenon de guidage (15), qui présente sur une partie de sa périphérie un certain nombre d'encoches d'encliquetage (52) qui coopèrent avec une saillie d'encliquetage (51) d'un ressort d'encliquetage (50) en forme de V pour enclencher le levier de présélection (10) dans des positions de rotation souhaitées.

5. Appareil de présélection (7) selon la revendication 4, **caractérisé en ce que** la plaque d'encliquetage (53) présente des fentes (54) dans lesquelles des talons d'encliquetage (14) en saillie de la denture (13) du levier de présélection (10) peuvent s'enclencher, de telle sorte que le poussoir de butée (20) est fixé en direction axiale entre la surface de base intérieure du corps de base (40) et la plaque d'encliquetage (53) et par conséquent aussi le levier de présélection (10) dans le corps de base (40).

6. Appareil de présélection (7) selon une ou plusieurs des revendications précédentes, **caractérisé en ce que** le boîtier (39, 40) peut être disposé sur le tracé du câble Bowden (1, 2) entre un variateur (8) et la patte d'actionnement (6).
